# EUROPEAN PATENT SPECIFICATION

(11) **EP 2 607 291 B1**
(45) Date of publication and mention of the grant of the patent: **01.04.2015**
(21) Application number: 11195434.3
(22) Date of filing: 22.12.2011
(51) Int. Cl.: B66D 5/30, B66B 5/00, F16D 65/00, B66D 5/08

(54) **Electromagnetic actuator, brake arrangement comprising the electromagnetic actuator, and a method for reducing the energy consumption of the electromagnetic actuator**
Elektromagnetischer Aktuator, Bremsanordnung mit dem elektromagnetischem Aktuator und Verfahren zur Reduzierung des Energieverbrauchs des elektromagnetischen Aktuators
Actionneur électromagnétique, agencement de frein comportant l'actionneur électromagnétique et procédé de réduction de la consommation d'énergie de l'actionneur électromagnétique

(43) Date of publication of application: 26.06.2013
(73) Proprietor: Kone Corporation, 00330 Helsinki (FI)
(72) Inventor: Olkkonen, Mika, 05860 Hyvinkää (FI); Avantola, Timo, 13210 Hämeenlinna (FI)
(74) Representative: K & H Bonapat

(56) References cited:
- EP-A1- 0 790 429
- WO-A1-2008/114754
- WO-A1-2011/036335
- DE-B3-102006 009 876
- DE-C1- 19 749 608
- JP-A- 10 019 065

## Description

### Field of the invention

The invention relates to electromagnetism, more particularly to electromagnetic actuators.

### Background art

Published international patent application WO 2011/036335 (see FIG. 1 of the present document) makes known a practical structure of an electromagnetic actuator 10. The electromagnetic actuator 10 comprises a yoke 12 and an elastically-loaded armature 13 that can be pulled to the yoke 12 by energizing the coil 15 by passing an electric current to the coil 15, so compressing the elastic member 17.

When the electric current disappears, the magnetic pulling of the armature 13 to the yoke 12 ceases and the elastic member 17 is decompressed, thus pushing the armature 13 farther from the yoke 12.

An electromagnetic actuator 10 of this kind can be used, among other purposes, in a machinery brake of an elevator. For this purpose, the armature 13 is adapted to drive a brake pad 11, which can be used to brake a brake disk or brake drum 18, or a rotor 19, or any other moving part.

A drive impact results from the armature 13 being pulled to the yoke 12, which impact is caused by the momentum of the armature 13, said momentum being imparted by the armature 13 when it stops in a very short time. It is known in the art to damp the drive impact by using a sheet 14 of resilient material, which can absorb the momentum in a very short time by deforming reversibly. This arrangement is known to help to avoid the, sometimes loud, clicking sound when the electromagnetic actuator is being switched. The arrangement is also known to help to avoid wear and tear of the yoke, armature and other moving parts of the electromagnetic actuator.

WO 2008/114754 A1 discloses an electromagnetic actuator according to the preamble of claim 1.

### Objective of the invention

The inventors have observed electromagnetic actuators of the known kind in operation and have found out that the energy consumption of such electromagnetic actuators may be significantly high.

The better the damping between the yoke and armature is, the thicker the sheet of resilient material needs to be. A thick sheet of resilient material tends to leave the armature rather far away from the yoke when the electromagnetic actuator is pulling the armature. This may lead to loss of compression in the elastic member, and, even more importantly, to loss of magnetic attraction force between the yoke and the armature. In this case the magnet must be made stronger, such as e.g. by increasing the electric current in the coil.

In other words, the sheet of resilient material tends to weaken the magnetic flux between the yoke and the armature. That being the case, the coil must be driven with a higher current, which consumes more energy.

A first objective of the current invention is to reduce energy consumption in an electromagnetic actuator.

This objective can be achieved with an electromagnetic actuator according to independent patent claim 1 and with the method according to independent patent claim 10.

A second objective of the invention is to reduce energy consumption in a brake arrangement having at least one electromagnetic actuator. This objective can be achieved with a brake arrangement according to parallel independent patent claim 7.

The dependent patent claims describe advantageous aspects of the electromagnetic actuator, brake arrangement and method.

### Advantages of the invention

An electromagnetic actuator comprises at least one yoke, the shape of which is defined by at least one edge portion and at least one center portion, between which there is a gap portion for at least one coil. The edge portion and the center portion of the yoke extend farther from the back of the yoke than the gap portion. In such an electromagnetic actuator, there is at least one coil in the gap portion around the center portion.

In addition, there is at least one movable, elastically-loaded armature, configured to operate magnetically with said yoke, the armature having a surface, of which a part forms a contact portion that at least partly matches with said at least one edge portion and/or with the center portion.

The yoke, the at least one coil and the armature are configured such that: a) when an electric current is present in the at least one coil, the armature is magnetically pulled towards the yoke, causing compression of the at least one elastic member and the pulling of the armature towards the yoke, and b) when an electric current is not present in the at least one coil, the armature is pushed away from the yoke by decompression of the at least one elastic member.

According to the invention, the electromagnetic actuator further comprises at least one resilient damping element for reducing the drive force between the yoke and armature, so located that when the armature is being pulled towards the yoke the resilient element acts on the gap portion. The resilient element is arranged in such a manner that it leaves said at least one edge portion and/or said at least one center portion free.

According to the invention, the resilient element is arranged in such a manner that it leaves said at least one edge portion and said at least one center portion free, such that the resilient element does not reach the space of said at least one edge portion and of said at least one center portion.

In this manner, since the resilient damping element is arranged to act on the gap portion, and not to act on the edge portion, the center portion or both, the magnetic flux between the yoke and the armature can be impaired as little as possible while still achieving at least some, if not all, of the benefits of using the at least one resilient damping element.

When the yoke has a disc-like shape, and when the edge portion and gap portion are both arranged to extend around the yoke, a magnetic coupling that is rotationally as symmetrical as possible can be obtained. With this kind of arrangement, the relative rotational position of the armature with respect to the yoke can be ignored.

Also according to the invention, When the at least one resilient element is at least partly arranged in a groove or recess of the armature, the volume of the resilient element can be larger while keeping the volume that extends above the surrounding of the groove or recess low. This may be very important in practice since in this way the total volume of the resilient element used to absorb the momentum of the armature can be made sufficiently large. In this manner, the wear and tear of the resilient element can be reduced, compared to a situation in which the resilient element is made thinner, and also better damping capacity can be achieved owing to the larger volume. Optionally, the groove or recess may be made wider than the resilient element in order to improve accommodation of the resilient element under compression. This arrangement may improve the lifetime of the resilient element, since now the resilient element may become wider under compression. In this manner, it may be easier to avoid overcompression of the resilient element, which may help to avoid microscopic fractures in the resilient element, especially when the resilient element consists of, or comprises, polymers, the polymer chain of which may be irreversibly deformed and so destroyed under too much pressure.

If the electromagnetic actuator comprises at least two damping elements that have been arranged so that there is a separating distance between each of the at least two resilient elements, the effect of the damping elements, which deform under compression, can be better compensated. The damping elements tend to become slightly wider under compression, which makes them thinner, as may happen when an automobile is fully loaded. The separating distance helps to better accommodate the resilient elements. In this manner, microscopic material damages impairing the functional ability of the resilient elements may be better avoided.

If a separating distance is available, the armature may be made to extend into the separating distance, i.e. between the at least two resilient elements. In this manner, some of the accommodation space can be used for the armature, potentially improving the magnetic coupling between the yoke and armature.

If also the armature has a disc-like shape, and if the at least one resilient element is arranged to extend around the armature, the magnetic coupling between the yoke and armature can be made strong, and in addition a loop-like structure, such as an O-ring or corresponding, can be used as the at least one resilient element.

If the electromagnetic actuator further comprises a protection element between the coil and the resilient element, damages to the coil can be better avoided. The protection element is most preferably embedded in the gap portion and/or in a part of the edge portion, center portion or both, limiting the outermost end of the gap portion as viewed from the back of the yoke, in order to better avoid it being displaced during operation of the electromagnetic actuator.

If the protection element comprises, or is made of, steel, more particularly stainless steel, most preferably in the form of at least one sheet, the weakening of the magnetic field can be avoided as much as possible.

The brake arrangement comprises at least one electromagnetic actuator according to the invention. The armature is adapted to drive a movable member in the brake arrangement. The movable member is most preferably a brake element and/or a carrier of a brake element. In this manner, the advantage of the smaller energy consumption of the electromagnetic actuator can be utilized in the brake arrangement, which can thus be made to consume less energy. The brake element is most preferably a brake pad adapted to brake a brake drum or brake disc.

The brake arrangement can be installed in an elevator hoisting machine, as its operational brake, emergency brake or both, potentially physically implemented as a single brake. This is a particularly useful way to reduce the energy consumption of an elevator that is normally installed in a building or a structure. Most elevators are operated, or at least ready to be operated, at all times except when in maintenance. If the elevator brake is implemented using an electromagnetic actuator in which the yoke-armature is normally in the open position and must be closed to disengage the brake, the coil must be energized during use of the elevator, which consumes a lot of energy.

### List of drawings

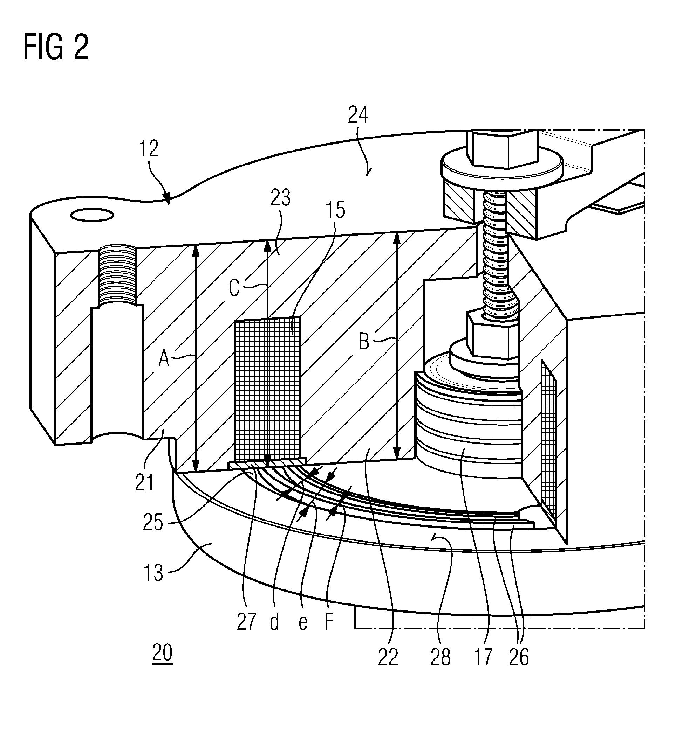

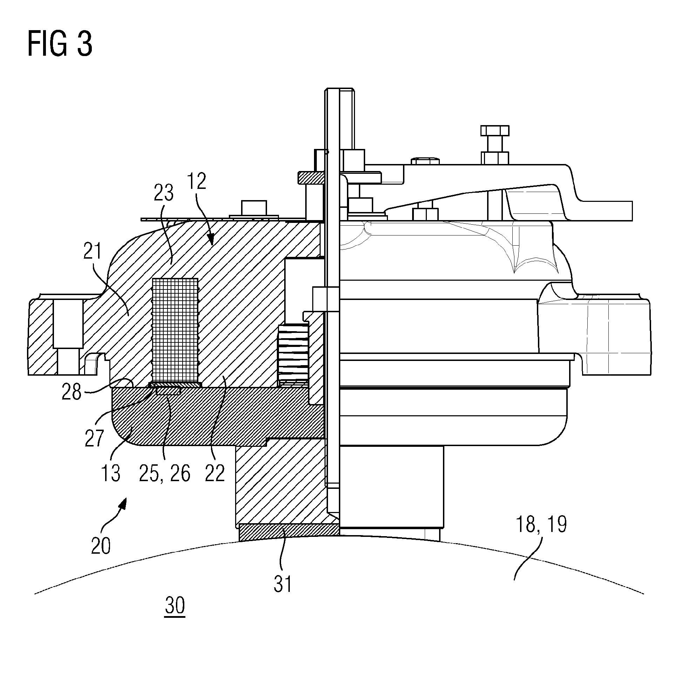

In the following, the electromagnetic actuator, the brake arrangement and the method are described in more detail with reference to examples shown in FIGS. 2 and 3 of the attached drawings, wherein:
- FIG. 1: presents an electromagnetic actuator according to prior art;
- FIG. 2: presents a three-dimensional sectioned view of an electromagnetic actuator according to the first aspect of the present invention; and
- FIG. 3: presents a sectioned view of the electromagnetic actuator of FIG. 2 installed in a brake arrangement.

The same reference numbers refer to similar structural elements in all the drawings.

### Detailed description

The hoisting machine of an elevator is braked with a machinery brake. An elevator car is kept in its position in the elevator hoistway with a machinery brake when the car is stopped at a floor level. This same brake is often used also as an emergency brake, as required by elevator regulations, which brake activates in exceptional situations, such as during an electricity outage. A drum brake or a disc brake, for example, can be used as a brake.

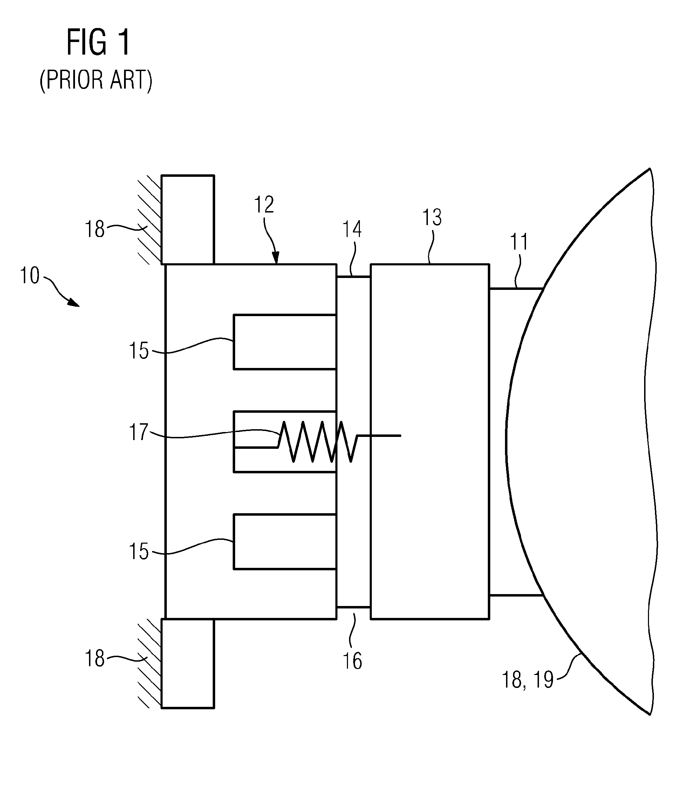

The machinery brake of a hoisting machine of a prior-art elevator, such as that described in connection with FIG. 1, comprises a frame part, which is the yoke 12 of an electromagnetic actuator, and an armature 13 provided with a brake pad 11, which armature moves in relation to the frame part. In addition, the machinery brake comprises a brake drum 18 or brake disc that is connected to the rotor 19 of the hoisting machine and rotates with it, which drum 18 or disc comprises a braking surface.

The machinery brake of an elevator generally operates such that when the brake is activated, an elastic member 17, such as a spring, comprised in the machinery brake presses the brake pad 11 of the armature 13 against the braking surface of the rotor 19 or against any other suitable rotating part of the machine 19, in which case the elevator car stays in its position.

During a run of the elevator, electric current is passed to the at least one coil 15 (which acts as an electromagnet, i.e. it is a magnetizing coil) comprised in the machinery brake. In this situation a magnetic field circulates from the frame part into armature part 13 and back to the frame part via the air gap 16, and therefore the coil 15 pulls the brake pad 11 away from and off the braking surface, in which case the brake is disengaged and the elevator car can move up or down in the elevator hoistway.

The brake implementation of the elevator can be e.g. such that the same hoisting machine comprises two or more machinery brakes.

As the electric current with which the coil 15 is energized decreases, the force exerted by the elastic member 17 finally exceeds the force of attraction of the coil 15, and the brake activates.

Owing to the imbalance of forces, the brake pad 11 strikes against the braking surface of the rotating part of the machine. When the brake opens, the coil 15 again exerts on the armature part 13 a force that is in the opposite direction to the elastic force caused by decompression of the elastic member 17. When the force exerted on the armature part by the electromagnet grows to be greater than the spring force, the gap 16 between the frame part and the armature 13 closes, and the armature 13 strikes against the frame part.

Collision of the metallic parts of a brake against each other when the brake is activated or opened may cause a disturbing noise. The noise problem is eliminated whenever possible by adding as a damper e.g. a sheet 14 of resilient material to the air gap 16 between the frame part and the armature 13, which sheet 14 of resilient material prevents direct contact between the metal surfaces of the frame part 2 and of the armature part 3 when the brake is open, leaving a small so-called hysteresis air gap between the frame part and the armature 13.

The sheet 14 can be made of an elastic material, such as rubber; the damper can also be made of e.g. paper and glue. The hysteresis air gap can vary e.g. owing to manufacturing tolerances of the damper.

On one hand, also the electric current of the electromagnet of the brake can vary, due among other things to a temperature variation of the resistance of the magnetizing coil. The force of attraction of the electromagnet decreases as the hysteresis air gap grows and/or the electric current of the magnetizing coil decreases. In this case the brake no longer necessarily stays open properly.

On the other hand, it would be useful to minimize the air gap 16 between the frame part and the armature part 13, because the smaller the air gap 16, the less magnetizing current is needed for opening of the brake and therefore also the dimensioning of the coil 15 can be smaller. Alternatively, or in addition to this, dimensioning of the brake can be minimized.

FIG. 2 shows a three-dimensional sectioned view of an electromagnetic actuator 20.

The electromagnetic actuator 20 comprises one yoke 12, the form of which is defined by at least one edge portion 21 and at least one center portion 22, between which there is a gap portion 23 for at least one coil 15.

The edge portion 21 and the center portion 22 of the yoke 12 extend farther from the back 24 of the yoke 12 than the gap portion 23. The gap portion 23 thus forms with the edge portion 21 and the center portion 22 a recess to accommodate at least one coil 15. The dimension of the end of the edge portion 21 from the back 24 of the yoke 12 has been marked A, the dimension of the end of the center portion 22 from the back 24 of the yoke 12 has been marked B. As is clearly visible, the dimension C, which denotes the distance from the back 24 of the yoke 12 to the bottom of the protective element 27, is equal to A and/or B or may be slightly smaller. Therefore, it is obvious that the gap portion 23 of the yoke 12 does not extend as far from the back 24 of the yoke 12 as the edge portion 21 and/or the center portion 22.

The electromagnetic actuator 20 further comprises at least one coil 15 in said gap portion 23 around said center portion 22.

In addition, the electromagnetic actuator 20 further comprises at least one movable, elastically-loaded armature 13, configured to operate magnetically with said yoke 12, the armature 13 having a surface 28, of which a part forms a contact portion that at least partly matches with said at least one edge portion 21 and/or with the center portion 22.

The yoke 12, coil 15 and armature 13 are so configured that when an electric current is present in the coil 15, the armature 13 is magnetically pulled towards the yoke 12, causing compression of the elastic member 17 and pulling the armature 13 towards the yoke 12. When the electric current is not present in the at least one coil 15, i.e. when the coil 15 is not energized, the armature 13 is pushed away from the yoke 12 by decompression of the at least one elastic member 17.

Compared with the electromagnetic actuator 10 shown in FIG. 1, in the electromagnetic actuator 20 shown in FIG. 2 the sheet 14 of resilient material is completely, or at least partly, omitted.

Instead of the sheet 14, there is at least one resilient damping element 26 present for reducing the drive force between the yoke 12 and armature 13. The resilient damping element 26 is so located that when the armature 13 is being pulled towards the yoke 12 the resilient element 26 acts on the gap portion 23. The at least one resilient damping element 26 is arranged in such a manner that it leaves the edge portion 21 and/or the center portion 22 free.

The yoke 12 has a disc-like shape. The edge portion 21 and the gap portion 23 are both arranged to extend around the yoke 12. The resilient element 26 is at least partly arranged in a groove or recess 25 of the armature 13. The groove or recess 25 may have a width e that can be made larger than the width F of the resilient element 26 in order to improve accommodation of the resilient element 26 under compression.

In FIG. 2 there are two resilient elements 25 present that have been arranged so that there is a separating distance d between them. The armature 13 could be made to extend into the separating distance d, i.e. between the resilient elements 26.

Also the armature 13 has most preferably a disc-like shape. In this case the at least one resilient element 26 may be arranged to extend around the armature 13. The groove or recess 25, of which there may be more than one, may be machined in the armature 13. The groove or grooves or recess 25 or recesses are most preferably aligned to the coil 15 of the electromagnetic actuator 20.

The resilient material 26 is fitted into the groove or grooves or recess 25 or recesses.

The alignment has the effect that the effective air gap between the armature 13 and the yoke 12 can be minimized. Therefore, also less electric current is necessary to energize the coil 15 in a manner necessary to operate the electromagnetic.

The resilient elements 26 may be rings or they may have any other suitable shape. The resilient elements are preferably made of rubber, or paper and glue, but also different kind of elastomeric materials are suitable (e.g. polyurethane). Instead of, or in addition to, this they may be of, or comprise, any material specified as the material of the damping arrangement of the machinery brake disclosed in published patent application WO 2011/036335, the contents of which are incorporated herein by reference.

The electromagnetic actuator 20 further comprises a protection element 27 between the coil 15 and the resilient element 26. The protection element 27 is most preferably embedded in the gap portion 23 and/or in a part of the edge portion 21, center portion 22 or both, thus limiting the outermost end of the gap portion 23 as viewed from the back 24 of the yoke 12.

The protection element 27 comprises, or is made of, steel, more particularly stainless steel, and most preferably is implemented as a sheet.

Preferably the protection element 27 is wider than the recess 25. In this case an edge of the edge portion 21 and an edge of the center portion 22 act as shoulders and support the protection element, which receives the drive impact through the resilient elements 26. With this kind of configuration of the protection element 27, the coil 15 can be well protected against drive impacts.

FIG. 3 shows a brake arrangement 30 that comprises at least one electromagnetic actuator 20. The armature 13 is adapted to drive a movable member 31 in the brake arrangement 30, wherein the movable member is a brake element, such as a brake pad, but it also could be a carrier of a brake element. The brake pad can be adapted to brake a brake drum or brake disc.

The brake arrangement can most preferably be installed in an elevator hoisting machine but other areas of application are possible.

## Claims

1. An electromagnetic actuator (20), comprising:
- at least one yoke (12), the form of which defines at least one edge portion (21) and at least one center portion (22), between which there is a gap portion (23) for at least one coil (15), the edge portion (21) and the center portion (22) of the yoke (12) extending further from the back (24) of the yoke (12) than the gap portion (23);
- at least one coil (15) at said gap portion (23) around said center portion (22);
- at least one movable, elastically loaded armature (13), configured to magnetically operate with said yoke (12), the armature (13) having a surface (28), of which a part forms a contact portion which at least partly matches with said at least one edge portion (21) and/or of the center portion (22);
- said yoke (12), at least one coil (15) and armature (13) being so configured that:
i) when an electric current is present in the at least one coil (15), the armature (13) is magnetically pulled towards the yoke (12), causing compression of at least one elastic member (17) and pulling the armature (13) towards the yoke (12), and
ii) when an electric current is not present in the at least one coil (15), the armature (13) is pushed away from the yoke (12) by decompression of the at least elastic member (17); and
- at least one resilient damping element (26) for reducing the drive force between the yoke (12) and armature (13), so located that when the armature (13) is being pulled towards the yoke (12), the resilient element (26) acts at the gap portion (23), the resilient element (26) arranged in such a manner that it leaves said at least one edge portion (21) and/or said at least one center portion (22) free, **characterised in that** said resilient element (26) is at least partly arranged in a groove or recess (25) of the armature, which groove or recess is optionally made wider than the resilient element in order to improve accommodation of the resilient element under compression.

2. An electromagnetic actuator (20) according to claim 1, wherein the yoke (12) has a disc-like shape, and wherein the edge portion (21) and gap portion (23) are both arranged to extend around the yoke (12).

3. An electromagnetic actuator (20) according to claim 1, wherein there are at least two resilient elements (26) present that have been arranged so that there is a separating distance (d) between each of the at least two resilient elements (26); optionally the armature (13) may be made to extend into the separating distance (d) that is, between the at least two resilient elements (26).

4. An electromagnetic actuator (20) according to any one of the preceding claims, wherein also the armature (13) has a disc-like shape, and wherein the at least one resilient element (26) is arranged to go around the armature (13).

5. An electromagnetic actuator (20) according to claim 4, further comprising a protection element (27) between the coil (15) and the resilient element (26), the protection element most advantageously being refrained in the gap portion (23) and/or in the part of edge portion (21), center portion (22) or both limiting the outermost end of the gap portion (23) as seen from the back (24) of the yoke (12).

6. An electromagnetic actuator (20) according to claim 5, wherein the protection element (27) comprises or is made of steel, in particular stainless steel, most advantageously in form of at least one sheet.

7. A brake arrangement (30) that comprises at least one electromagnetic actuator (20) according to any one of the preceding claims 1 to 7, and wherein the armature (13) is adapted to drive a movable member (31) in the brake arrangement (30), the movable member advantageously being a brake element and/or a carrier of a brake element.

8. A brake arrangement (30) according to claim 7, wherein the brake element (31) is a brake pad adapted to brake a brake drum or brake disk.

9. A brake arrangement (30) according to any one of the preceding claims 7 or 8, wherein the brake arrangement (30) has been installed in an elevator hoisting machine.

10. A method of reducing energy consumption of an electromagnetic actuator, in particular in an electromagnetic actuator of a brake arrangement that most advantageously has been installed in an elevator hoisting machine, the electromagnetic actuator comprising:
- at least one yoke (12), the form of which defines at least one edge portion (21) and at least one center portion (22), between which there is a gap portion (23) for at least one coil (15), the edge portion (21) and the center portion (22) of the yoke extending further from the back (24) of the yoke (12) than the gap portion (23);
- at least one coil (15) at said gap portion (23) around said center portion (22);
- at least one movable, elastically loaded armature (13), configured to magnetically operate with said yoke (12), the armature (13) having a surface (28), of which a part forms a contact portion which at least partly matches with said at least one edge portion (21) and/or of the center portion (22);
- said yoke (12), at least one coil (15) and armature (13) being so configured that:
i) when an electric current is present in the at least one coil (15), the armature (13) is magnetically pulled towards the yoke (12), causing compression of at least one elastic member (17) and pulling the armature (13) towards the yoke (12), and
ii) when an electric current is not present in the coil (15), the armature (13) is pushed away from the yoke (12) by decompression of the at least elastic member (17);
- at least one damping element (26) for reducing the drive impact between the yoke (12) and armature (13), which at least one resilient element (26) being at least partly arranged in a groove or recess (25) of the armature (13) , which groove or recess (25) , optionally made wider than the resilient element (26) in order to improve accommodation of the resilient element (26) under compression, is so located that when the armature (13) is being pulled towards the yoke (12), the resilient element (26) acts at the gap portion (23), whereby the resilient element (26) has been arranged in such a manner that it leaves said at least one edge portion (21) and/or said at least one center portion (22) free.

11. A method according to claim 10, wherein the yoke (12) has a disc-like shape, and wherein the edge portion (21) and gap portion (22) are both arranged to extend around the yoke (12).

12. A method according to any one of the preceding claims 10 to 11, wherein there at least two damping elements (26) present that have been arranged so that there is a separating distance (d) between each of the at least two resilient elements (26); optionally the armature (13) may be adapted to extend into the separating distance (d).

13. A method according to any one of the preceding claims 10 to 12, wherein also the armature (13) has a disc-like shape, and wherein the at least one resilient element (26) is arranged to go around the armature (13).

## Patentansprüche

1. Elektromagnetischer Aktuator (20), aufweisend:
- mindestens einen Gelenkkopf (12), dessen Form zumindest einen Randabschnitt (21) und mindestens einen Zentrumsabschnitt (22) definiert, wozwischen ein Spaltabschnitt (23) für mindestens eine Spule (15) vorliegt, wobei sich der Randabschnitt (21) und der Zentrumsabschnitt (22) des Gelenkkopfes (12) von der Rückseite (24) des Gelenkkopfes (12) weiter erstrecken als der Spaltabschnitt (23);
- mindestens eine Spule (15) an besagtem Spaltabschnitt (23) um den Zentrumsabschnitt (22);
- mindestens einen bewegbaren, elastisch spannbaren Anker (13), der dazu konfiguriert ist, mit besagtem Gelenkkopf (12) magnetisch zu zusammenzuwirken, wobei der Anker (13) eine Fläche (28) hat, von der ein Teil einen Kontaktabschnitt bildet, der zumindest teilweise mit dem besagten mindestens einen Randabschnitt (21) und/oder dem Zentrumsabschnitt (22) funktional aufeinander abgestimmt ist;
- wobei besagter Gelenkkopf (12), die mindestens eine Spule (15) und der Anker (13) derart konfiguriert sind, dass:
i) der Anker (13) magnetisch in Richtung des Gelenkkopfs (12) gezogen wird, wenn ein elektrischer Strom in der mindestens einen Spule (15) anliegt, was eine Kompression von mindestens einem elastischen Element (17) verursacht und eben ein Ziehen des Ankers (13) in Richtung des Gelenkkopfes (12), und
ii) der Anker (13) von dem Gelenkkopf (12) durch eine Dekompression des mindestens einen elastischen Elements (17) weggedrückt wird, wenn ein elektrischer Strom in der mindestens einen Spule (15) nicht anliegt; und
- mindestens ein elastisches Dämpfungselement (26) zum Reduzieren der Antriebskraft zwischen dem Gelenkkopf (12) und dem Anker (13), das so platziert ist, dass wenn der Anker (13) in Richtung des Gelenkkopfs (12) gezogen wird, das elastische Element (26) als der Spaltabschnitt (23) fungiert, wobei das elastische Element (26) derart angeordnet ist, dass es den mindestens einen Randabschnitt (21) und/oder den mindestens einen Zentrumsabschnitt (22) frei gibt, **dadurch gekennzeichnet, dass** das elastische Element (26) zumindest teilweise in einer Nut oder einer Vertiefung (25) des Ankers angeordnet ist, welche Nut oder Vertiefung optional breiter gemacht ist als das elastische Element, um eine Aufnahme des elastischen Elementes im komprimierten Zustand zu verbessern.

2. Elektromagnetischer Aktuator (20) nach Anspruch 1,
wobei der Gelenkkopf (12) eine scheibenförmige Gestalt hat, und wobei der Randabschnitt (21) und der Spaltabschnitt (23) beide so angeordnet sind, dass sie sich um den Gelenkkopf (12) erstrecken.

3. Elektromagnetischer Aktuator (20) nach Anspruch 1,
wobei mindestens zwei elastische Elemente (26) vorliegen, die angeordnet sind, so dass ein separierender Abstand (d) zwischen den mindestens zwei elastischen Elementen (26) vorliegt;
optional der Anker (13) so gefertigt sein kann, dass er sich in den separierenden Abstand (d) erstreckt, d.h. zwischen die mindestens zwei elastischen Elemente (26).

4. Elektromagnetischer Aktuator (20) gemäß einem der vorangehenden Ansprüche, wobei auch der Anker (13) eine scheibenförmige Gestalt hat, und wobei das mindestens eine elastische Element (26) angeordnet ist, um den Anker (13) zu umlaufen.

5. Elektromagnetischer Aktuator (20) gemäß Anspruch 4,
ferner aufweisend ein Schutzelement (27) zwischen der Spule (15) und dem elastischen Element (26), wobei das Schutzelement in vorteilhaftester Ausführung in dem Spaltabschnitt (23) und/oder in dem Teil des Randabschnittes (21), des Zentrumsabschnitts (22) oder beiden zurückgehalten ist, wodurch das äußerste Ende des Spaltabschnitts (23) gesehen von der Rückseite (24) des Gelenkkopfes (12) begrenzt ist.

6. Elektromagnetischer Aktuator (20) gemäß Anspruch 5, wobei das Schutzelement (27) aus Stahl gefertigt ist oder diesen aufweist, insbesondere rostfreier Stahl, und am vorteilhaftesten in der Form von mindestens einer Schicht.

7. Bremseinrichtung (30), die mindestens einen elektromagnetischen Aktuator (20) gemäß einem der vorangehenden Ansprüche 1 - 7 aufweist, und wobei der Anker (13) dazu adaptiert ist, ein bewegliches Element (31) in der Bremseinrichtung (30) anzutreiben, wobei das bewegliche Element in vorteilhafter Weise ein Bremselement und/oder ein Träger eines Bremselements ist.

8. Bremseinrichtung (30) nach Anspruch 7, wobei das Bremselement (31) ein Bremsbelag ist, der dazu adaptiert ist, eine Bremstrommel oder eine Bremsscheibe zu bremsen.

9. Bremseinrichtung (30) nach einem der vorangehenden Ansprüche 7 oder 8, wobei die Bremseinrichtung (30) in einer Aufzugshebemaschine installiert ist.

10. Verfahren zum Reduzieren eines Energieverbrauches eines elektromagnetischen Aktuators, insbesondere in einem elektromagnetischen Aktuator einer Bremseinrichtung, die in vorteilhaftester Weise in einer AufzugsHebemaschine installiert ist, wobei der elektromagnetische Aktuator aufweist:
- mindestens einen Gelenkkopf (12), dessen Form zumindest einen Randabschnitt (21) und mindestens einen Zentrumsabschnitt (22) definiert, wozwischen ein Spaltabschnitt (23) für mindestens eine Spule (15) vorliegt, wobei sich der Randabschnitt (21) und der Zentrumsabschnitt (22) des Gelenkkopfes (12) von der Rückseite (24) des Gelenkkopfes (12) weiter erstrecken als der Spaltabschnitt (23);
- mindestens eine Spule (15) an besagtem Spaltabschnitt (23) um den Zentrumsabschnitt (22);
- mindestens einen bewegbaren, elastisch spannbaren Anker (13), der dazu konfiguriert ist, mit besagtem Gelenkkopf (12) magnetisch zu zusammenzuwirken, wobei der Anker (13) eine Fläche (28) hat, von der ein Teil einen Kontaktabschnitt bildet, der zumindest teilweise mit dem besagten mindestens einen Randabschnitt (21) und/oder dem Zentrumsabschnitt (22) funktional aufeinander abgestimmt ist;
- wobei besagter Gelenkkopf (12), die mindestens eine Spule (15) und der Anker (13) derart konfiguriert sind, dass:
i) der Anker (13) magnetisch in Richtung des Gelenkkopfs (12) gezogen wird, wenn ein elektrischer Strom in der mindestens einen Spule (15) anliegt, was eine Kompression von mindestens einem elastischen Element (17) verursacht und eben ein Ziehen des Ankers (13) in Richtung des Gelenkkopfes (12), und
ii) der Anker (13) von dem Gelenkkopf (12) durch eine Dekompression des mindestens einen elastischen Elements (17) weggedrückt wird, wenn ein elektrischer Strom in der Spule (15) nicht anliegt; und
- mindestens ein Dämpfungselement (26) zum Reduzieren des Antriebsstoßes zwischen dem Gelenkkopf (12) und dem Anker (13), das so platziert ist, dass wenn der Anker (13) in Richtung des Gelenkkopfs (12) gezogen wird, das elastische Element (26) als der Spaltabschnitt (23) fungiert, wobei das elastische Element (26) derart angeordnet ist, dass es den mindestens einen Randabschnitt (21) und/oder den mindestens einen Zentrumsabschnitt (22) frei gibt, wobei das elastische Element (26) zumindest teilweise in einer Nut oder einer Vertiefung (25) des Ankers angeordnet ist, welche Nut oder Vertiefung optional breiter gemacht ist als das elastische Element, um eine Aufnahme des elastischen Elementes im komprimierten Zustand zu verbessern.

11. Verfahren nach Anspruch (10), wobei der Gelenkkopf (12) eine scheibenförmige Gestalt hat, und wobei der Randabschnitt (21) und der Spaltabschnitt (23) beide so angeordnet sind, dass sie sich um den Gelenkkopf (12) erstrecken.

12. Verfahren gemäß einem der vorangehenden Ansprüche 10 - 11, wobei mindestens zwei Dämpfungselemente (26) vorliegen, die angeordnet sind, so dass ein trennender Abstand (d) zwischen den mindestens zwei elastischen Elementen (26) vorliegt;
optional der Anker (13) so adaptiert sein kann, sich in den separierenden Abstand (d) zu erstrecken.

13. Verfahren gemäß einen der vorangehenden Ansprüche 10 - 12, wobei auch der Anker (13) eine scheibenförmige Gestalt hat, und wobei das mindestens eine elastische Element (26) angeordnet ist, um der Anker (13) zu umlaufen.

## Revendications

1. Actionneur électromagnétique (20), comprenant :
au moins une bobine de déviation (12), dont la forme définit au moins une partie marginale (21) et au moins une partie centrale (22), entre lesquelles se trouve une partie d'espacement (23) pour au moins une bobine (15), la partie marginale (21) et la partie centrale (22) de la bobine de déviation (12) s'étendant davantage depuis l'arrière (24) de la bobine de déviation (12) que la partie d'espacement (23) ;
au moins une bobine (15) au niveau de ladite partie d'espacement (23) autour de ladite partie centrale (22) ;
au moins une armature (13) mobile chargée de manière élastique, configurée pour fonctionner magnétiquement avec ladite bobine de déviation (12), l'armature (13) ayant une surface (28), dont une partie forme une partie de contact qui est au moins partiellement en correspondance avec ladite partie marginale (21) et/ou la partie centrale (22) ;
ladite bobine de déviation (12), au moins une bobine (15) et l'armature (13) étant configurées de telle sorte que :
i) lorsqu' un courant électrique est présent dans l'au moins une bobine (15), l'armature (13) est poussée magnétiquement vers la bobine de déviation (12), entraînant la compression d'au moins un élément élastique (17) et tirant l'armature (13) vers la bobine de déviation (12), et
ii) lorsqu' un courant électrique n'est pas présent dans l'au moins une bobine (15), l'armature (13) est poussée à l'écart de la bobine de déviation (12) par décompression de l'au moins un élément élastique (17) ; et
au moins un élément amortisseur résistant (26) pour réduire la force d'entraînement entre la bobine de déviation (12) et l'armature (13), situé de telle manière que, lorsque l'armature (13) est tirée vers la bobine de déviation (12), l'élément résistant (26) agit au niveau de la partie d'espacement (23), l'élément résistant (26) disposé de telle manière qu'il laisse libre ladite au moins une partie marginale (21) et/ou ladite au moins une partie centrale (22)
**caractérisé par le fait que** ledit élément résistant (26) est au moins partiellement disposé dans une gorge ou un évidement (25) de l'armature, laquelle gorge ou ledit évidement est éventuellement réalisé(e) plus large que l'élément résistant afin d'améliorer le logement de l'élément résistant sous compression.

2. Actionneur électromagnétique (20) selon la revendication 1, dans lequel la bobine de déviation (12) a une forme de disque, et dans lequel la partie marginale (21) et la partie d'espacement (23) sont toutes les deux disposées pour s'étendre autour de la bobine de déviation (12).

3. Actionneur électromagnétique (20) selon la revendication 1, dans lequel sont présents au moins deux éléments résistants (26) qui ont été disposés de telle sorte qu'il y a une distance de séparation (d) entre chacune des au moins deux éléments résistants (26) ; éventuellement l'armature (13) peut être réalisée pour s'étendre dans la distance de séparation (d), à savoir, entre les au moins deux éléments résistants (26).

4. Actionneur électromagnétique (20) selon l'une quelconque des revendications précédentes, dans lequel l'armature (13) a également une forme de disque, et dans lequel l'au moins un élément résistant (26) est disposé pour passer autour de l'armature (13).

5. Actionneur électromagnétique (20) selon la revendication 4, comprenant en outre un élément de protection (27) entre la bobine (15) et l'élément résistant (26), l'élément de protection étant plus avantageusement évité dans la partie d'espacement (23) et/ou dans la portion de partie marginale (21), de partie centrale (22) ou des deux limitant l'extrémité la plus extérieure de la partie d'espacement (23) vu de l'arrière (24) de la bobine de déviation (12).

6. Actionneur électromagnétique (20) selon la revendication 5, dans lequel l'élément de protection (27) comprend ou est constitué d'acier, en particulier d'acier inoxydable, plus avantageusement sous la forme d'au moins une feuille.

7. Agencement de frein (30) qui comprend au moins un actionneur électromagnétique (20) selon l'un quelconque des revendications précédentes 1 à 7, et dans lequel l'armature (13) est adaptée pour entraîner un élément mobile (31) dans l'agencement de frein (30), l'élément mobile étant avantageusement un élément de frein et/ou un support d'un élément de frein.

8. Agencement de frein (30) selon la revendication 7, dans lequel l'élément de frein (31) est un patin de frein adapté pour freiner un tambour de frein ou un disque de frein.

9. Agencement de frein (30) selon l'une quelconque des revendications précédentes 7 ou 8, dans lequel l'agencement de frein (30) a été installé dans un mécanisme de levage d'ascenseur.

10. Procédé de réduction de la consommation d'énergie d'un actionneur électromagnétique, en particulier dans un actionneur électromagnétique d'un agencement de frein qui a été installé plus avantageusement dans un mécanisme de levage d'ascenseur, l'actionneur électromagnétique comprenant :
au moins une bobine de déviation (12), dont la forme définit au moins une partie marginale (21) et au moins une partie centrale (22), entre lesquelles se trouve une partie d'espacement (23) pour au moins une bobine (15), la partie marginale (21) et la partie centrale (22) de la bobine de déviation s'étendant davantage depuis l'arrière (24) de la bobine de déviation (12) que la partie d'espacement (23) ;
au moins une bobine (15) au niveau de ladite partie d'espacement (23) autour de ladite partie centrale (22) ;
au moins une armature (13) mobile chargée de manière élastique, configurée pour fonctionner magnétiquement avec ladite bobine de déviation (12), l'armature (13) ayant une surface (28), dont une partie forme une partie de contact qui est au moins partiellement en correspondance avec ladite partie marginale (21) et/ou la partie centrale (22) ;
ladite bobine de déviation (12), au moins une bobine (15) et l'armature (13) étant configurées de telle sorte que :
i) lorsqu'un courant électrique est présent dans l'au moins une bobine (15), l'armature (13) est poussée magnétiquement vers la bobine de déviation (12), entraînant la compression d'au moins un élément élastique (17) et tirant l'armature (13) vers la bobine de déviation (12), et
ii) lorsqu'un courant électrique n'est pas présent dans la bobine (15), l'armature (13) est poussée à l'écart de la bobine de déviation (12) par décompression de l'au moins un élément élastique (17) ;
au moins un élément amortisseur (26) pour réduire l'impact d'entraînement entre la bobine de déviation (12) et l'armature (13), ledit au moins un élément résistant (26) étant au moins partiellement disposé dans une gorge ou un évidement (25) de l'armature (13), laquelle gorge ou ledit évidement (25), éventuellement réalisé(e) plus large que l'élément résistant (26) afin d'améliorer le logement de l'élément résistant (26) sous compression, est situé(e) de telle manière que, lorsque l'armature (13) est tirée vers la bobine de déviation (12), l'élément résistant (26) agit au niveau de la partie d'espacement (23), l'élément résistant (26) ayant été disposé de telle manière qu'il laisse libre ladite au moins une partie marginale (21) et/ou ladite au moins une partie centrale (22).

11. Procédé selon la revendication 10, dans lequel la bobine de déviation (12) a une forme de disque, et dans lequel la partie marginale (21) et la partie d'espacement (22) sont toutes les deux disposées pour s'étendre autour de la bobine de déviation (12).

12. Procédé selon l'une quelconque des revendications précédentes 10 à 11, dans lequel sont présents au moins deux éléments amortisseurs (26) qui ont été disposés de telle sorte qu'il y a une distance de séparation (d) entre chacune des au moins deux éléments résistants (26) ; éventuellement l'armature (13) peut être adaptée pour s'étendre dans la distance de séparation (d).

13. Procédé selon l'une quelconque des revendications précédentes 10 à 12, dans lequel l'armature (13) a également une forme de disque, et dans lequel l'au moins un élément résistant (26) est disposé pour passer autour de l'armature (13).
